# EUROPEAN PATENT SPECIFICATION

(11) **EP 1 649 079 B1**
(45) Date of publication and mention of the grant of the patent: **07.01.2009**
(21) Application number: 04739384.8
(22) Date of filing: 27.05.2004
(51) Int. Cl.: C23G 5/06, C23F 11/14, C09D 5/08, E21B 41/02, C23G 1/14

(54) **METHOD FOR INHIBITING CORROSION USING QUATERNARY AMMONIUM CARBONATES**
VERFAHREN ZUR KORROSIONSINHIBIERUNG UNTER VERWENDUNG VON QUATERNÄREN AMMONIUMCARBONATEN
PROCÉDÉ POUR INHIBER LA CORROSION EN UTILISANT DES CARBONATES D'AMMONIUM QUATERNAIRE

(30) Priority: 28.05.2003 US 474081 P
(43) Date of publication of application: 26.04.2006
(73) Proprietor: LONZA, INC., Allendale, NJ 07401-1613 (US)
(72) Inventor: CHIANG, Michael, Y., Flemington, NJ O8822-3306 (US); HALL, Larry, K., Easton, PA 18045-5436 (US); KIMLER, Joseph, Yardville, NJ 08620-2601 (US); SCHEBLEIN, Joseph, W., Flemington, NJ 08822-2016 (US)
(74) Representative: Riegler, Norbert Hermann
(86) International application number: PCT/EP2004/005704
(87) International publication number: WO 2004/106589

(56) References cited:
- WO-A-98/23792
- WO-A-99/12889
- WO-A-03/006419
- US-A- 3 121 091
- US-A- 4 792 417
- US-A- 5 438 034
- US-B1- 6 521 028

## Description

The present invention relates to the use of quaternary ammonium carbonates and bicarbonates as anticorrosive agents.

In processes where metal surfaces come in contact with water, whether as liquid water or humid air, there is always the danger of corrosion. This is particularly problematic when the metal itself is prone to corrosion and is not coated.

Examples of metals prone to corrosion are found in stamped metal car parts made from ferrous alloys, abraded surfaces such as machined steel parts, and machine components made from cast iron. Although corrosion inhibitors (or anticorrosive agents) have been known for many years, most are still inadequate. One key inadequacy is that of water solubility. Most corrosion inhibitors are produced from long chain fatty acids and derivatives and often have poor aqueous solubility. This is especially problematic when the metal surface contacts both water and oil, such as in oil and gas production, petroleum processing, and metal working applications. Petrochemical processing itself presents a wide array of challenges for corrosion inhibitors including cooling systems, refinery units, pipelines, steam generators, and oil or gas producing units.

In order to reduce the rate of corrosion of metals (such as metal vessels, equipment metal parts, equipment surfaces, pipelines, and equipment used to store the fluids), especially those containing iron, corrosion inhibitors are typically added to the fluid contacting the metal. The fluid may be a gas, a slurry, or a liquid.

Traditional solvents for cleaning metal and metal parts, such as mineral spirits and kerosene, have been replaced in recent years by aqueous formulations due to concerns about volatile organic carbons (VOCs). This move toward water-based formulations for cleaning metal parts is not without problems. Water does not solubilize grease or oily residues easily, and water itself can markedly increase the corrosion of the metal parts themselves. In addition, formulations are typically used as microemulsions, which require the use of additional surfactants for stabilization during the cleaning process. Morpholine is frequently used in these cleaning formulations to provide corrosion protection. However, morpholine does little to contribute to cleaning, and does not stabilize the microemulsion, since it is not a good surfactant. Furthermore, morpholine is a regulated product, since it may be used to prepare illicit drugs.

Quaternary ammonium compounds have found limited use as corrosion inhibitors. U.S. Patent No. 6,521,028 discloses the use of particular pyridinium and quinolinium salts, in either propylene glycol or propylene glycol ether solvents, as corrosion inhibitors.

U.S. Patent Nos. 6,080,789, and 6,297,285 disclose the use of quaternary ammonium carbonates as disinfectants.

U.S. Patent No. 4,792,417 discloses a composition for inhibiting stress corrosion of stainless steel in contact with aqueous and/or polar organic solutions which contain chloride ions and optionally cuprous ions. The composition comprises an aqueous or polar organic solution of a particular quaternary ammonium alkylcarbonate or quaternary ammonium benzylcarbonate. U.S. Patent No. 3,121,091 discloses quaternary imidazolium and imidazolinium bisulfites and quaternary ammonium salts of unstable acids, e.g., quaternary ammonium nitrites, bisulfites and bicarbonates. In contrast to quaternary ammonium halides (usually chlorides), the solutions of these salts are non-corrosive.

There is still a need for corrosion inhibitors that possess good affinity for metallic surfaces and are both water and oil soluble. Additionally, there is a desire for new corrosion inhibitors that add cleaning and or surfactant capability. Corrosion inhibitors that also afford antimicrobial protection to the finished formulation to which they are applied would be particularly advantageous.

It has now been discovered that quaternary ammonium carbonates and bicarbonates inhibit the corrosion of metals.

The present invention relates to a method for inhibiting the corrosion of metal surfaces by applying (or depositing) a composition comprising (a) a quaternary ammonium carbonate, optionally, a quaternary ammonium, bicarbonate; and (b) optionally, a solvent, as described in claim 1. This method is particularly useful for down-hole applications in oilfields and metal working.

### Corrosion Inhibitor Compositions

The present invention is directed towards the inhibition of corrosion of metal substrates. The term "inhibition of corrosion" as used herein includes, but is not limited to, the prevention or reduction in the rate of oxidation of a metal surface, generally when the metal is exposed to water or air, or a combination of the two. The oxidation of metal is an electrochemical reaction generally resulting either in a loss of metal from the surface or an accumulation of oxidation products at the surface of the metal. The term "metal" as used herein includes, but is not limited to, steel, cast iron, aluminum, metal alloys, and combinations thereof. In one embodiment, the metal substrate is an aerosol can.

Quaternary ammonium carbonates useful in the present invention are those having the formula: 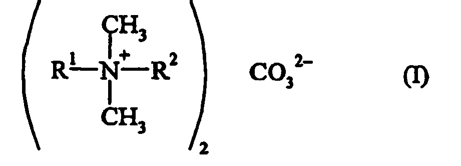 wherein R¹ and R² are each independently a C₁₋₂₀ alkyl group or an aryl-substituted C₁₋₂₀ alkyl group (e.g., a benzyl group). R¹ and R² may be the same or different

The term "aryl-substituted alkyl group" refers to an alkyl group substituted by one or more aromatic carbon rings, in particular phenyl rings, such as phenylethyl (the alkyl group being bound to the nitrogen atom) or benzyl. Similarly, the term "aryl-substituted C₁₋₂₀ alkyl group" refers to a C₁₋₂₀ alkyl group substituted by one or more aromatic carbon rings.

The term "C*ₙ₋ₘ* alkyl group" (for example, "C₁₋₂₀ alkyl group") refers to any linear or branched alkyl group having from n to m (for example, from 1 to 20) carbon atoms.

According to one embodiment, R¹ and R² are C₄₋₂₀ alkyl or aryl-substituted C₄₋₂₀ alkyl groups. According to a preferred embodiment, R¹ is a C₈₋₁₂ alkyl or aryl-substituted C₈₋₁₂ alkyl group. A more preferred quaternary ammonium carbonate is didecyldimethylammonium carbonate, such as di-*n*-decyldimethylammonium carbonate.

Didecyldimethylammonium carbonate is available as a 50 percent by weight solution in water containing 4 percent or less by weight of an alcohol, such as methanol or ethanol. The solution is a yellow/orange liquid that has a slightly fruity odor.

Suitable quaternary ammonium bicarbonates are those having the formula: 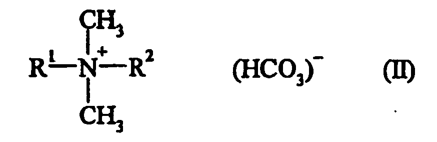 wherein R¹ and R² have the meanings and preferred meanings as defined above for the quarternary ammonium carbonates (I).

A preferred quaternary ammonium bicarbonate is didecyldimethylammonium bicarbonate, such as di-*n*-decyldimethylammonium bicarbonate.

The aforementioned quaternary ammonium carbonates and bicarbonates can be prepared by methods known in the art, such as those described in U.S. Patent No. 5,438,034 and International Publication No. WO 03/006419.

The quaternary ammonium carbonates and bicarbonates are in equilibrium. The concentrations of bicarbonates and carbonates vary depending on the pH of the solution in which they are contained.

In a preferred embodiment, R¹ and R² in the quaternary ammonium carbonates (I) and/or bicarbonates (II) denote the same C₁₋₂₀ alkyl group.

In a more preferred embodiment, R¹ and R² in the quaternary ammonium carbonates (I) and/or bicarbonates (II) denote C₁₀ alkyl groups, most preferably *n*-C₁₀ alkyl groups.

In another preferred embodiment, R¹ in the quaternary ammonium carbonates (I) and/or bicarbonates (II) denotes a methyl group. More preferably, both R¹ and R² denote a methyl group.

In still another preferred embodiment, R¹ in the quaternary ammonium carbonates (I) and/or bicarbonates (II) denotes a benzyl or phenylethyl group.

The above described quaternary ammonium carbonates and bicarbonates can be used alone as corrosion inhibitors or formulated into corrosion inhibitor formulations.

Unlike traditional quaternary ammonium chlorides, the carbonate and bicarbonate based quaternary ammonium compounds described herein not only have low corrosion properties, but act as corrosion inhibitors.

The carbonates and bicarbonates are miscible in water in all concentrations, have high oil solubility, and have a high affinity for metal surfaces. In addition, the carbonates and bicarbonates increase the solubility of oils, such as fragrance oils and lipophilic substances, in aqueous solutions.

Suitable solvents for the quaternary ammonium carbonates and bicarbonates include polar solvents (such as water and water-miscible polar solvents), glycols, glycol ethers (such as propylene glycol) and mixtures thereof.

Optionally, one or more additional surfactants may be included in the composition. Suitable surfactants include non-ionic surfactants, cationic surfactants (other than the quaternary ammonium carbonates and bicarbonates described herein), anionic surfactants, amphoteric surfactants, and mixtures thereof. Non-limiting examples of such surfactants are amine oxides, linear alcohol ethoxylates, secondary alcohol ethoxylates, ethoxylate ethers, betaines, fatty acids containing from 6 to 22 carbon atoms, salts of said fatty acids, and mixtures thereof. For example, the surfactant may be nonylphenol ethoxylate.

The quaternary ammonium carbonate and bicarbonate corrosion inhibitors inhibit corrosion of metals in aqueous and oil environments, including water and oil mixtures (e.g., in down-hole applications in oilfields and metal working). A non-limiting example of an oil found in an oil environment is a petroleum distillate. Examples of petroleum distillates include, but are not limited to, kerosene, white spirits, and hydrocarbon fractions. In metal working, aqueous solutions and water-oil mixtures or emulsions are frequently used for lubrication (such as for lubricating metal working tools).

Other conventional additives, such as builders, colorants, perfumes, fragrances, cleaners, and mixtures thereof, may be included in the anticorrosive composition.

The amount of quaternary ammonium carbonates and/or bicarbonates applied to a metal substrate is a corrosion inhibiting effective amount, i.e., an amount to prevent or reduce the rate of corrosion of the metal substrate. The corrosion inhibiting effective amount may vary depending upon the use intended, and can be determined by one of ordinary skill in the art.

Without wishing to be bound by any particular theory, it is believed that in aqueous solutions, the quaternary ammonium carbonate/bicarbonate compounds described herein have a natural affinity for the metal, since they also act as cationic surfactants, and therefore migrate to the surface of the metal. Once at the surface, the quaternary ammonium carbonate/bicarbonate blocks oxygen and/or air from causing further oxidation of the metal surface.

Typically, the corrosion inhibiting composition can be supplied in either a dilutible concentrated form, or in a ready to use form. Generally, the ready to use form contains from about 0.005% to about 1.00% by weight of quaternary ammonium carbonate, bicarbonate, or mixture thereof based upon 100% by weight of the total composition. Preferably, the ready to use form contains from about 100 ppm to about 1000 ppm of quaternary ammonium carbonate, bicarbonate, or a mixture thereof, based upon the 100% by weight of total composition. Preferably, the final use dilution contains from about 100 ppm to about 500 ppm of quaternary ammonium carbonate, bicarbonate, or a mixture thereof, based upon 100% by weight of total use dilution.

The composition may be applied to the metal substrate by any means known in the art, including, but not limited to, coating, depositing, dipping, soaking, brushing, spraying, mopping, washing or the like.

In preferred embodiments, the metal substrate is selected from the group consisting of steel, cast iron, aluminum, metal alloys, and combinations thereof.

### Coatings

The aforementioned anti-corrosive quaternary ammonium carbonates, bicarbonates, and mixtures thereof may be incorporated into anti-corrosive coatings for metal substrates. The coatings include a coating material. Preferably, the quaternary ammonium carbonate, bicarbonate, or mixture thereof is dissolved or dispersed in the coating material.

Suitable coating materials include, but are not limited to, organic resins, such as epoxy resins, urethane resins, vinyl resins, butyral resins, phthalic acid resins, curable resins, such as isocyanate and butadiene resins, as well as traditional coatings, such as varnishes, low VOC solvent coatings based on polyurethanes, and water-based coatings such as rosin fatty acid vinylic emulsions. The coating may be formed by methods known in the art.

The coatings may be, for example, paints, primers, and industrial coatings.

Additional ingredients that may be present in the coating include, but are not limited to, UV stabilizers, curing agents, hardening agents, flame retardants, and mixtures thereof.

### Aqueous and Non-Aqueous Solutions (Including Cleaning Solutions and Metalworking Fluids)

The aforementioned corrosion inhibitor compositions are particularly useful as components of aqueous cleaning solutions to retard and minimize the corrosion of metal parts, particularly steel, being cleaned with these solutions. They are also useful as components of aqueous or non-aqueous metalworking fluids and as components of aqueous or non-aqueous solutions used as corrosion inhibitors in powder metallurgy. The corrosion inhibitor compositions also afford anti-microbial protection to the substrate, such as metal, to which they are applied. The term "cleaning solution" refers to an aqueous acidic or alkaline solution that is employed in the cleaning of metal surfaces, e.g., the internal metal surfaces of process equipment. These cleaning solutions typically have a pH in the range of about 1 to about 10. Exemplary cleaning solutions and their uses are disclosed in several patents, e.g., U.S. Patent Nos. 3,413,160; 4,637,899; Re. 30,796; and Re. 30,714.

Cleaning solution compositions may include at least one organic acid selected from the group consisting of alkylene polyamine polycarboxylic acids, hydroxyacetic acid, formic acid, citric acid and mixtures or salts thereof together with a corrosion inhibitor in accord with the foregoing compositions present in an amount effective to inhibit the corrosion of metals in contact with the solution. Exemplary organic acids include *N*,*N*,*N'*,*N'*-ethylenediaminetetraacetic acid (EDTA), tetraammonium EDTA, diammonium

EDTA, *N*-(2-hydroxyethyl)-*N*,*N'*,*N'*-ethylenediaminetriacetic acid (HEDTA) and salts thereof.

These aqueous cleaning solutions typically exhibit a pH from about 1 to about 10. Exemplary amounts of corrosion inhibitor (i.e., quaternary ammonium carbonate, bicarbonate, or a mixture thereof) are from about 0.05 to about 1 percent by weight Exemplary organic acid cleaning solutions include those described in U.S. Patent No. 6,521,028.

The corrosion inhibitor compositions may also be used in aqueous cleaning solutions to inhibit the corrosion of metal by hypochlorite as well as by inorganic acids, e.g., sulfuric acid or phosphoric acid. These cleaning solutions include an amount of corrosion inhibitor in accord with the present invention that is sufficient to inhibit the corrosion of metals by these inorganic acids. Exemplary amounts of corrosion inhibitor are from about 0.05 to about 1 percent by weight.

Corrosion inhibitors prevent, or at least minimize, excess corrosion of clean base metal during chemical cleaning operations. The corrosion inhibitor compositions may be employed advantageously over a wide pH range in a wide number of cleaning solutions employing an organic acid as the cleaning agent.

Cleaning solutions are frequently employed in the removal of scale and rust from ferrous metals. However, the solutions often contact other metals that are present as an integral part of the system being cleaned. Examples of those metals include copper, copper alloys, zinc, zinc alloys and the like.

The corrosion inhibitor compositions advantageously are employed in an amount sufficient to inhibit acid-induced corrosion of metals that are in contact or contacted with aqueous cleaning solutions. According to one embodiment, the corrosion inhibitor compositions of the present invention are employed in an amount sufficient to give a corrosion rate less than or equal to about 73.2 g·m⁻²·d⁻¹ (0.015 lb/ft²/day). The corrosion inhibitor composition may be dissolved or dispersed in the cleaning solution prior to contacting the cleaning solution and the metal to be cleaned.

### DESCRIPTION OF THE DRAWINGS

Figure 1 is a picture of cold rolled plates of steel, each in a didecyldimethylammonium chloride (DDAC) solution or a didecyldimethylammonium carbonate/bicarbonate (DDACB) solution after 90 minutes at room temperature.
Figure 2 is a picture of cold rolled plates of steel, each in a didecyldimethylammonium chloride (DDAC) solution or a didecyldimethylammonium carbonate/bicarbonate (DDACB) solution after 30 days at room temperature.
Figure 3 is a picture of cold rolled plates of steel, each in a didecyldimethylammonium chloride (DDAC) solution or a didecyldimethylammonium carbonate/bicarbonate (DDACB) solution after 9 months at room temperature. A sample of cold rolled steel in deionized water after 5 hours is also shown.
Figure 4 is a picture of cold rolled plates of steel after soaking for 9 months at room temperature in a didecyldimethylammonium chloride solution or a didecyldimethylammonium carbonate/bicarbonate solution, and after soaking in deionized water for 5 hours at room temperature.

The following examples illustrate the invention, but are not limiting thereof. All parts and percentages are given by weight unless otherwise stated.

### Example 1

The object of this experiment was to test the removal of greasy soil with engine cleaner formulations. A mixture of 7.5 g vegetable oil (Crisco^{®} oil, The J. M. Smucker Co., Orville, OH) and 0.1 g carbon black was heated until liquefied. 0.5 g of the heated mixture was spread onto a metal coupon (steel coupon of 0.813×25.4×76.2 mm³ (0.032"×1"×3") dimensions available from Q-Panel Lab Products, Cleveland OH) and allowed to dry. The metal coupon was then partially submerged in 50 ml of a formulation containing morpholine or didecyldimethylammonium carbonate/bicarbonate (DDACB), as detailed in Table 1 below.

After 1 hour, the metal coupon was removed from the formulation, and rinsed with water. A visual assessment was performed as to how much of the greasy soil was removed from the submerged portion of the metal coupon. The results are set forth in Table 1.

As shown in Table 1, replacement of Morpholine by didecyldimethylammonium carbonate in the microemulsion results in significant improvement in both formulation stability and cleaning ability. Formulations A and B, both containing didecyldimethylammonium carbonate, resulted in removal of 100% of the greasy soil from the metal coupon, and maintained one phase, whereas formulations C and D, both of which contained morpholine and no didecyldimethylammonium carbonate, resulted in only 20% greasy soil removal and phase separated into two opaque phases.

**Table 1**

| **Ingredient** | **Formulation A (% wt/wt)** | **Formulation B (% Wt/Wt)** | **Formulation C (% wt/wt)** | **Formulation D (% wt/wt)** |
|---|---|---|---|---|
| Aromatic 200™ | 6.0 | 6.0 | 6.0 | 6.0 |
| Exxate^{®} 700 | 6.0 | 6.0 | 6.0 | 6.0 |
| Dowanol^{®} DpnB | 20.0 | 20.0 | 20.0 | 20.0 |
| DDACB (50%) | 12.0 | 15.0 | - | - |
| Neodol^{®} 91-6 | - | - | 7.5 | 7.5 |
| Morpholine | - | - | - | 7.5 |
| Deionized Water | 56.0 | 53.0 | 60.5 | 53.0 |
| TOTAL | 100.0 | 100.0 | 100.0 | 100.0 |
| Appearance | One phase Slightly hazy | One phase Clear | Two phases Opaque | Two phases Opaque |
| Greasy Soil Removal | 100% | 100% | 20% | 20% |

| | | | | |
|---|---|---|---|---|
| Aromatic 20™ is a mixture of aromatic hydrocarbons available from ExxonMobil Chemical of Houston, TX. Exxate^{®} 700 is oxo-heptyl acetate available from ExxonMobil Chemical of Houston, TX. Dowanol^{®} DpnB is dipropylene glycol *n*-butyl ether available from Dow Chemical of Midland, MI. Neodol^{®} 91-6 is a mixture of ethoxylated C₉₋₁₁ alcohols with an average degree of ethoxylation of six (6 moles ethylene oxide per mole of alcohol) available from Shell Chemicals of Houston, TX. | | | | |

### Example 2

Cold rolled steel coupons (mild steel coupons of 0.813×25.4×76.2 mm³ (0.032"×1"×3") dimensions (Q-Panel Lab Products, Cleveland OH)) were fully submerged in either deionized water or tap water, and in either deionized water containing 100 or 1000 ppm of didecyldimethylammonium carbonate/bicarbonate (DDACB) mixture or tap water containing 100 or 1000 ppm of didecyldimethylammonium carbonate/bicarbonate mixture in 120 ml (4 oz.) glass jars with screw-on caps. Each solution was tested with two coupons (coupons 1-10 and A-J, respectively). After one week, the coupons were removed, rinsed with either deionized or tap water and brushed lightly with a soft nylon brush. The coupons were then dried under a stream of nitrogen and weighed. The results are set forth in Table 2 below. Differences in weight are expressed as (-) for weight loss, or (+) for weight gain. All weight differences are given in percent, based on the original weight of the respective coupon.

**Table 2**

| **Sample** | **Coupon** | **pH** | **Wt. [g] (before)** | **Wt. [g] (after)** | **% Wt. change** |
|---|---|---|---|---|---|
| DI water | 1 | 8.6 | 12.6248 | 12.6193 | -0.044 |
| | A | | 12.6521 | 12.6463 | -0.046 |
| DI water + 100 ppm | 2 | 9.1 | 12.6161 | 12.6112 | -0.039 |
| DDACB | B | | 12.5611 | 12.5555 | -0.045 |
| DI water + 1000 ppm | 3 | 8.3 | 12.5870 | 12.5873 | +0.002 |
| DDACB | C | | 12.5824 | 12.5824 | ±0.000 |
| DI water + 100 ppm | 4 | 9.1 | 12.7384 | 12.7385 | +0.001 |
| DDACB | D | | 12.6235 | 12.6185 | -0.040 |
| DI water + 1000 ppm | 5 | 8.9 | 12.7594 | 12.7596 | +0.002 |
| DDACB | E | | 12.6350 | 12.6351 | +0.001 |
| Tap water | 6 | 7.1 | 12.6807 | 12.6735 | -0.057 |
| | F | | 12.5739 | 12.5667 | -0.057 |
| Tap water + 100 ppm | 7 | 7.2 | 12.7034 | 12.6969 | -0.051 |
| DDACB | G | | 12.5835 | 12.5770 | -0.052 |
| Tap water + 1000 ppm | 8 | 7.5 | 12.6561 | 12.6564 | +0.002 |
| DDACB | H | | 12.5933 | 12.5935 | +0.002 |
| Tap water + 100 ppm | 9 | 7.3 | 12.6553 | 12.6476 | -0.061 |
| DDACB | I | | 12.6930 | 12.6868 | -0.049 |
| Tap water + 1000 ppm | 10 | 7.4 | 12.6675 | 12.6674 | -0.001 |
| DDACB | J | | 12.5273 | 12.5284 | +0.009 |

As shown in Table 2, solutions containing 1000 ppm of didecyldimethylammonium carbonate/bicarbonate did not degrade after 1 week, as evidenced by essentially no loss in weight of the metal coupon. No sediment formation was observed for these samples. The other test solutions became brown and showed sediment on the bottom of the glass jar. Corrosion was observed on the cold rolled steel coupon exposed to deionized water after one hour, while no corrosion was observed on the coupon exposed to deionized water containing 1000 ppm of the didecyldimethylammonium carbonate/bicarbonate after one week.

### Example 3

Deionized water (58.2% w/w), surfactant (octyldimethylamine oxide (40% active), FMB-A08^{®}, Lonza, Inc., Allendale, NJ) (8.0% w/w) and a 50% aqueous solution of a quaternary compound (didecyldimethylammonium chloride (DDAC), or didecyldimethylammonium carbonate/bicarbonate mixture (DDACB)) (33.8% w/w) were mixed together.

A 1:256 dilution of the mixture (660 ppm active quaternary ammonium compound) in water was used to assess the corrosion inhibition properties of DDAC and DDACB. Cold rolled steel plates (steel coupons of 0.813×25.4×76.2 mm³ (0.032"×1"×3") dimensions (Q-Panel Lab Products, Cleveland OH)) were immersed in each of the aqueous solutions and monitored, at room temperature, for a period of nine months.

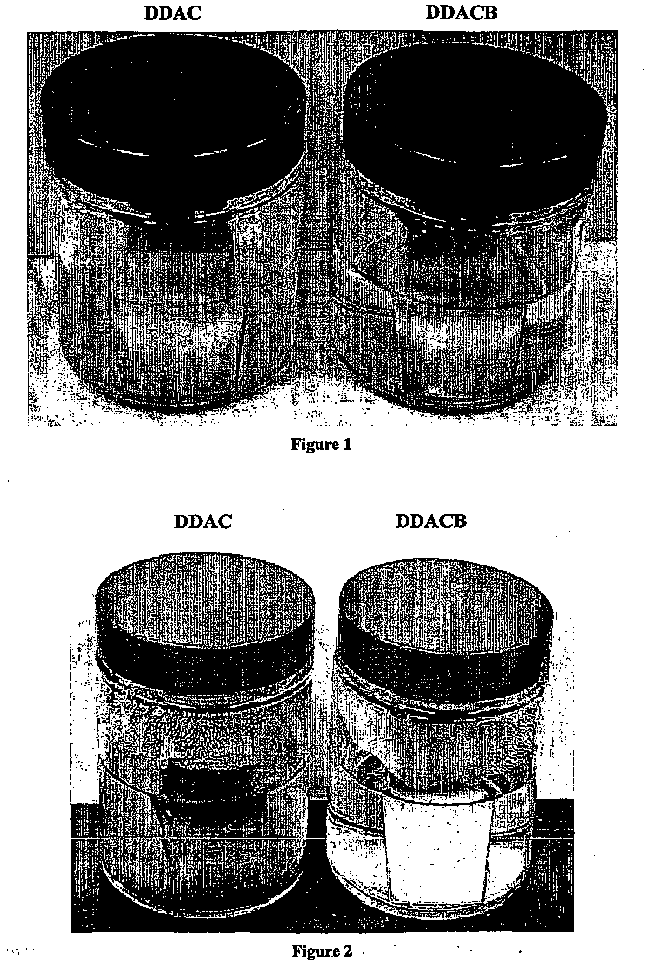

Figures 1 and 2 are pictures of the plates after standing at room temperature in the aqueous solutions for 90 minutes and 30 days, respectively. As can be seen, the plate in the DDAC solution has started to corrode, after only 90 minutes, and is badly corroded after 30 days. In contrast, the plate in DDACB shows no corrosion whatsoever, even after 30 days.

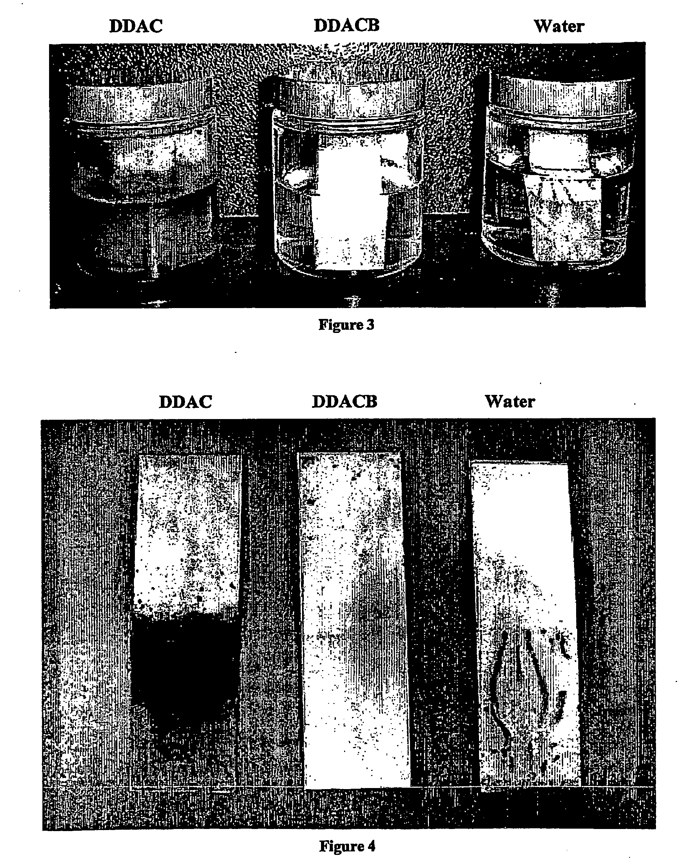

Figures 3 and 4 are pictures of the plates after standing at room temperature in the aqueous solutions for a total of 9 months. As can be seen, the plate in the DDACB solution shows no corrosion, whilst the plate in the DDAC solution is fully corroded. For comparison purposes, a piece of identical cold rolled steel, soaked in deionized (DI) water containing no quaternary ammonium compound is also shown. Even after only 5 hours in DI water, the plate shows some signs of corrosion.

## Claims

1. A method for inhibiting corrosion of a metal substrate comprising the step of contacting the substrate with a composition comprising
(a) a quaternary ammonium carbonate of formula 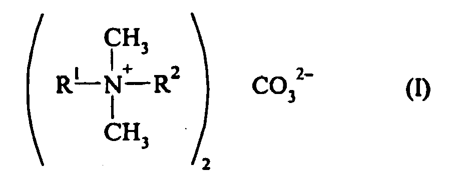 wherein R¹ is an optionally aryl-substituted C₁₋₂₀ alkyl group, and R² is an optionally aryl-substituted C₁₋₂₀ alkyl group,
and, optionally, a quaternary ammonium bicarbonate of formula 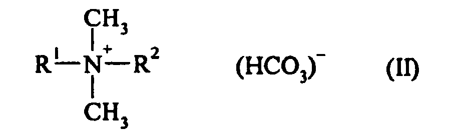 wherein R¹ and R² are as defined above; and
(b) optionally, a solvent.

2. The method of claim 1, wherein R¹ and R² are the same C₁₋₂₀ alkyl groups.

3. The method of claim 2, wherein R¹ and R² are C₁₀ alkyl groups.

4. The method of claim 3, wherein R¹ and R² are *n*-C₁₀ alkyl groups.

5. The method of claim 1, wherein R¹ is methyl.

6. The method of claim 5, wherein R¹ and R² are methyl.

7. The method of claim 1, wherein R¹ is benzyl or phenylethyl.

8. The method of any of claims 1 to 7, wherein the composition further comprises a surfactant selected from the group consisting of amine oxides, linear alcohol ethoxylates, secondary alcohol ethoxylates, ethoxylate ethers, betaines, fatty acids containing from 6 to 22 carbon atoms, salts of fatty acids containing from 6 to 22 carbon atoms, and mixtures thereof.

9. The method of claim 8, wherein the surfactant is nonylphenol ethoxylate.

10. The method of any of claims 1 to 9, wherein the metal substrate is in an oil environment.

11. The method of claim 10, wherein oil environment comprises a petroleum distillate.

12. The method of claim 11, wherein the petroleum distillate is selected from the group consisting of kerosene, white spirit, hydrocarbon fractions, and mixtures thereof.

13. The method of any of claims 1 to 12, wherein the composition further comprises at least one ingredient selected from the group consisting of builders, colorants, perfumes and fragrances.

14. The method of any of claims 1 to 13, wherein the metal substrate is selected from the group consisting of steel, cast iron, aluminum, metal alloys and combinations thereof.

## Patentansprüche

1. Verfahren zur Korrosionsinhibierung eines Metallsubstrats, umfassend das In-Kontakt-Bringen des Substrats mit einer Zusammensetzung, welche
(a) ein quartäres Ammoniumcarbonat der Formel 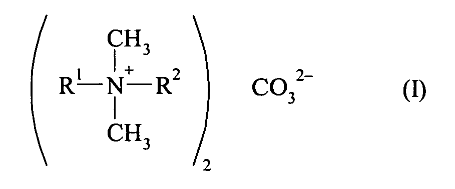 worin R¹ eine gegebenenfalls arylsubstituierte C₁₋₂₀-Alkylgruppe und R² eine gegebenenfalls arylsubstituierte C₁₋₂₀-Alkylgruppe ist,
und gegebenenfalls ein quartäres Ammoniumbicarbonat der Formel 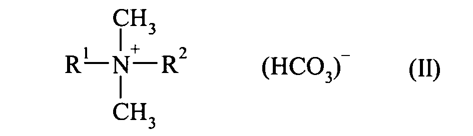 worin R¹ und R² wie oben definiert sind, und
(b) gegebenenfalls ein Lösungsmittel umfasst.

2. Verfahren nach Anspruch 1, worin R¹ und R² die gleiche C₁₋₂₀-Alkylgruppe sind.

3. Verfahren nach Anspruch 2, worin R¹ und R² C₁₀-Alkylgruppen sind.

4. Verfahren nach Anspruch 3, worin R¹ und R² *n*-C₁₀-Alkylgruppen sind.

5. Verfahren nach Anspruch 1, worin R¹ Methyl ist.

6. Verfahren nach Anspruch 5, worin R¹ und R² Methyl sind.

7. Verfahren nach Anspruch 1, worin R¹ Benzyl oder Phenylethyl ist.

8. Verfahren nach einem der Ansprüche 1 bis 7, worin die Zusammensetzung zusätzlich ein Tensid enthält, das ausgewählt ist aus der Gruppe bestehend aus Aminoxiden, linearen Alkoholethoxylaten, sekundären Alkoholethoxylaten, Ethoxylatethem, Betainen, Fettsäuren mit 6 bis 22 Kohlenstoffatomen, Salzen von Fettsäuren mit 6 bis 22 Kohlenstoffatomen, und Gemischen der zuvor Genannten.

9. Verfahren nach Anspruch 8, worin das Tensid Nonylphenolethoxylat ist.

10. Verfahren nach einem der Ansprüche 1 bis 9, worin sich das Metallsubstrat in einer ölhaltigen Umgebung befindet.

11. Verfahren nach Anspruch 10, worin das die ölhaltige Umgebung ein Erdöldestillat umfasst.

12. Verfahren nach Anspruch 11, worin das Erdöldestillat aus der Gruppe bestehend aus Kerosin, Lackbenzin, Kohlenwasserstofffraktionen und Gemischen der Genannten ausgewählt ist.

13. Verfahren nach einem der Ansprüche 1 bis 12, worin die Zusammensetzung zusätzlich wenigstens einen Bestandteil aus der Gruppe bestehend aus Gerüststoffen, Färbemitteln, Parfümen und Duftstoffen enthält.

14. Verfahren nach einem der Ansprüche 1 bis 12, worin das Metallsubstrat ausgewählt ist aus der Gruppe bestehen aus Stahl, Gusseisen, Aluminium, Metalllegierungen und deren Kombinationen.

## Revendications

1. Procédé d'inhibition de la corrosion d'un substrat métallique comprenant l'étape de mise en contact du substrat avec une composition comprenant
(a) un carbonate d'ammonium quaternaire de formule 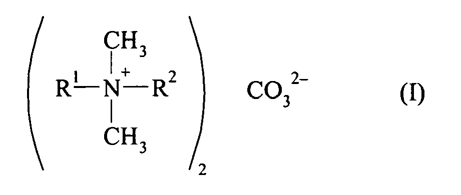 où R¹ est un groupement alkyle en C₁₋₂₀ facultativement aryl-substitué, et R² est un groupement alkyle en C₁₋₂₀ facultativement aryl-substitué,
et, facultativement, un bicarbonate d'ammonium quaternaire de formule 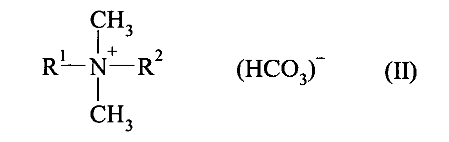 où R¹ et R² sont comme définis ci-dessus ; et
(b) facultativement, un solvant.

2. Procédé selon la revendication 1, dans lequel R¹ et R² sont des groupements alkyle en C₁₋₂₀ identiques.

3. Procédé selon la revendication 2, dans lequel R¹ et R² sont des groupements alkyle en C₁₀.

4. Procédé selon la revendication 3, dans lequel R¹ et R² sont des groupements alkyle en *n*-C₁₀.

5. Procédé selon la revendication 1, dans lequel R¹ est méthyle.

6. Procédé selon la revendication 5, dans lequel R¹ et R² sont méthyle.

7. Procédé selon la revendication 1, dans lequel R¹ est benzyle ou phényléthyle.

8. Procédé selon l'une quelconque des revendications 1 à 7, dans lequel la composition comprend en plus un tensioactif choisi parmi le groupe constitué d'oxydes d'amine, d'éthoxylates d'alcool linéaire, d'éthoxylates d'alcool secondaire, d'éthers d'éthoxylate, de bétaïnes, d'acides gras contenant de 6 à 22 atomes de carbone, de sels d'acides gras contenant de 6 à 22 atomes de carbone et des mélanges de ceux-ci.

9. Procédé selon la revendication 8, dans lequel le tensioactif est l'éthoxylate de nonyl-phénol.

10. Procédé selon l'une quelconque des revendications 1 à 9, dans lequel le substrat métallique est dans un environnement d'huile.

11. Procédé selon la revendication 10, dans lequel l'environnement d'huile comprend un distillat de pétrole.

12. Procédé selon la revendication 11, dans lequel le distillat de pétrole est choisi parmi le groupe constitué de kérosène, de white spirit, de fractions d'hydrocarbures et des mélanges de ceux-ci.

13. Procédé selon l'une quelconque des revendications 1 à 12, dans lequel la composition comprend en plus au moins un ingrédient choisi parmi le groupe constitué d'adjuvants (« builders »), de colorants, de matières odorantes et de parfums.

14. Procédé selon l'une quelconque des revendications 1 à 13, dans lequel le substrat métallique est choisi parmi le groupe constitué de l'acier, de la fonte de moulage, de l'aluminium, des alliages métalliques et des combinaisons de ceux-ci.
